# FASCICULE DE BREVET EUROPEEN

(11) **EP 0 926 374 B1**
(45) Date de publication et mention de la délivrance du brevet: **23.04.2003**
(21) Numéro de dépôt: 98124435.3
(22) Date de dépôt: 22.12.1998
(51) Int. Cl.: F16D 13/75

(54) **Embrayage à friction à dispositif de rattrapage d usure, notamment pour véhicule automobile**
Reibungskupplung mit einer Verschleiss-Nachstelleinrichtung, insbesondere für Kraftfahrzeuge
Friction clutch comprising a wear adjusting device, particularly for motor vehicle

(30) Priorité: 23.12.1997 FR 9716369
(43) Date de publication de la demande: 30.06.1999
(73) Titulaire: VALEO EMBRAYAGES, 80009 Amiens Cedex 1 (FR)
(72) Inventeur: Lopez, Carlos, Madrid 28005 (ES)
(74) Mandataire: Gamonal, Didier

(56) Documents cités:
- FR-A- 2 762 060
- PATENT ABSTRACTS OF JAPAN vol. 15, no. 336 (M-1151), 26 août 1991 & JP 03 129129 A (DAIKIN), 3 juin 1991

## Description

La présente invention concerne les embrayages à friction, notamment pour véhicule automobile, selon le preambule de la revendication 1. Un tel embrayage à friction est connu du document JP-A-03129129.

Elle se rapporte plus particulièrement aux embrayages à friction comportant un dispositif de rattrapage d'usure.

Ainsi qu'on le sait un embrayage à friction comporte au moins un disque de friction doté à sa périphérie externe de garnitures de friction, éventuellement fractionnées, destinées à être serrées entre un support, par exemple un volant, formant de plateau de réaction, et un plateau de pression.

Le support est conformé pour être lié en rotation à un premier arbre, tandis que le disque de friction est conformé pour être lié en rotation à un deuxième arbre.

Dans le cas d'une application pour un groupe motopropulseur de véhicule automobile, le premier arbre est un arbre menant, tandis que le second arbre est un arbre mené à savoir l'arbre d'entrée d'une boîte de transmission de mouvement, le plus souvent l'arbre d'entrée de la boîte de vitesses. Le volant, éventuellement en deux parties, est fixé centralement au vilebrequin du moteur à l'aide d'organes de fixation, tels que des vis, tandis que le disque de friction présente classiquement un moyeu central cannelé intérieurement pour sa liaison en rotation audit arbre d'entrée. Ce moyeu est accouplé rigidement ou élastiquement aux garnitures de friction.

Le plateau de pression est lié en rotation, avec liberté de déplacement axial, au volant et présente frontalement une face de friction pour les garnitures de friction, tandis que le volant présente dorsalement une face de friction pour lesdites garnitures.

Des moyens élastiques à action axiale prennent appui sur un couvercle et agissent sur la face dorsale du plateau de pression pour serrage des garnitures de friction entre les faces de friction du volant et du plateau de pression.

Ces moyens élastiques sont donc des moyens embrayeurs tendant à rapprocher le plateau de pression par rapport au volant pour serrer les garnitures de friction.

Le couvercle est de forme creuse et est conformé à sa périphérie externe pour être fixé au volant à l'aide de moyens de fixation.

Ces moyens de fixation peuvent être de tout type et consister par exemple en des moyens de soudage et/ou de sertissage. Le plus souvent le plateau de pression appartient à un ensemble unitaire, dit mécanisme d'embrayage, comportant le plateau de pression, les moyens embrayeurs, et le couvercle.

Cet ensemble unitaire comporte aussi des moyens débrayeurs associés aux moyens embrayeurs. Le plateau de pression est dans ce cas lié en rotation, avec liberté de déplacement axial, au volant par l'intermédiaire de premiers moyens de liaison en rotation. Par exemple le plateau de pression présente à sa périphérie externe, en saillie radiale des pattes, formant tenons, engagées dans des rainures, formant mortaises, ménagées axialement dans une jupe cylindrique d'orientation axiale que présente le couvercle à sa périphérie externe. Cette jupe se raccorde à l'une de ses extrémités axiales à un fond troué centralement et d'orientation transversale. Le fond est dirigé radialement vers l'intérieur. A son autre extrémité axiale, la jupe est fixée au volant à l'aide des moyens de fixation précités. Ainsi le plateau de pression est lié en rotation par une liaison à coopération de formes du type tenons-mortaises.

Classiquement les moyens de liaison en rotation, avec liberté de déplacement axial, consistent en des languettes élastiques allongées circonférentiellement en arc de cercle ou d'orientation tangentielle. Ces languettes, réparties en plusieurs groupes d'une ou plusieurs languettes superposées, sont fixées à l'une de leurs extrémités au plateau de pression, par exemple à des pattes radiales de celui-ci, et à l'autre de leurs extrémités au couvercle, par exemple à une plage radiale de celui-ci.

Les languettes constituent des moyens de rappel et assurent un rappel du plateau de pression en direction du fond du couvercle afin de désengager l'embrayage c'est-à-dire de libérer les garnitures de friction du disque de friction afin que celles-ci ne viennent lécher les faces de friction du volant et du plateau de pression.

Les moyens embrayeurs peuvent consister en une pluralité de ressorts à boudin ou en une rondelle élastique à action axiale du type rondelle Belleville, tandis que les moyens débrayeurs peuvent consister en une pluralité de leviers de débrayage agissant sur la rondelle Belleville pour modifier de manière contrôlée l'action de serrage exercée directement ou indirectement par cette rondelle Belleville sur le plateau de pression.

Le plus souvent les moyens embrayeurs et débrayeurs appartiennent à une même pièce appelée diaphragme comportant une partie périphérique, en forme de rondelle Belleville, prolongée radialement vers l'intérieur par une partie centrale fragmentée en doigts radiaux par des fentes. Les doigts radiaux forment les leviers de débrayage et donc les moyens débrayeurs, tandis que la rondelle Belleville à action axiale forme les moyens embrayeurs. En variante les moyens débrayeurs peuvent consister en un faux diaphragme, c'est-à-dire en un diaphragme dont la partie périphérique exerce une charge élastique faible, voire nulle. Ceci peut être réalisé en dotant cette partie périphérique de fentes radiales. Le faux diaphragme peut agir sur une ou par exemple deux rondelles Belleville montées en série ou en parallèle.

Quoi qu'il en soit, en agissant, en tirant ou en poussant, à l'aide d'une butée de débrayage sur l'extrémité interne des moyens débrayeurs on fait pivoter ou basculer lesdits moyens débrayeurs en sorte que ceux-ci agissent sur les moyens embrayeurs pour diminuer, puis annuler la charge (la force) de serrage qu'exercent les moyens embrayeurs sur le plateau de pression. Les garnitures de friction ne sont alors plus serrées entre le plateau de pression et le volant en sorte que le couple n'est plus transmis du premier arbre au second arbre.

On notera que les languettes élastiques, par leur action de rappel, permettent d'écarter le plateau de pression des garnitures de friction afin de libérer celles-ci. L'embrayage est alors désengagé ou débrayé. Normalement les garnitures de friction sont serrées de manière précitée grâce aux moyens embrayeurs. L'embrayage est donc normalement engagé ou embrayé.

Lors de la durée de vie de l'embrayage les garnitures de friction du disque de friction, et dans une moindre mesure les faces de friction du volant et du plateau de pression, s'usent. Il en résulte que le plateau de pression se rapproche du volant. En position embrayage engagé, la charge exercée par les moyens embrayeurs varie donc avec lesdites usures.

Il en est de même usuellement de la position de l'extrémité interne des moyens débrayeurs sur laquelle agit la butée de débrayage.

Pour éviter cela on a déjà proposé de doter l'embrayage à friction d'un dispositif pour compenser l'usure notamment des garnitures de friction et des faces de friction. Ce dispositif appelé par la suite dispositif de rattrapage d'usure, permet, par exemple dans le cas d'un embrayage à friction doté d'un diaphragme, d'avoir pour la position embrayage engagé globalement la même position pour l'extrémité interne des doigts du diaphragme et une charge globalement identique exercée par le diaphragme sur le plateau de pression et les garnitures de friction.

La courbe caractéristique de la butée de débrayage (charge exercée sur l'extrémité interne des doigts du diaphragme en fonction de la course) reste alors globalement identique.

Pour ce faire le dispositif de rattrapage d'usure comporte des moyens de rampes portés en partie par une première pièce fixe en rotation et mobile axialement et pour partie par une seconde pièce mobile en rotation et fixe axialement. Il est également prévu un déclencheur sensible à l'état de l'usure au moins des garnitures de friction pour commander le mouvement relatif entre lesdites pièces.

Le plus souvent la première pièce est constituée par la partie principale du plateau de pression et la seconde pièce par l'appui qu'offre le plateau de pression aux moyens embrayeurs. Pour plus de précisions on se reportera au document FR-A-2 426 834.

Normalement, c'est à dire lorsque l'embrayage en position engagée, la deuxième pièce est serrée entre la partie principale du plateau de pression et les moyens embrayeurs, tels que la rondelle Belleville du diaphragme.

Aucune rotation de cette deuxième pièce n'est donc possible. En cas d'usure notamment des garnitures de friction, le déclencheur permet de libérer la deuxième pièce, qui ainsi peut tourner lors de la manoeuvre de désengagement de l'embrayage ou lorsque l'embrayage est en position désengagée du fait que la charge exercée par les moyens embrayeurs est faible ou nulle. Une usure des garnitures de friction entraîne donc une augmentation de l'épaisseur du plateau de pression entre sa face de friction et l'appui qu'il offre aux moyens embrayeurs.

Il en résulte que le plateau de pression est modifié. Pour éviter de modifier le plateau de pression, on peut songer à adopter une solution décrite dans le document FR-A-2 722 852 (figures 1 à 6).

Cette solution conduit à implanter les moyens de rampes au sein du volant ainsi réalisé en deux parties.

L'une des parties est en forme de plateau de réaction offrant une face de friction pour la garniture de friction concernée, tandis que l'autre partie consiste en un support, d'orientation transversale, conformé pour être fixé au premier arbre.

Des seconds moyens de liaison en rotation, autorisant un déplacement axial, interviennent entre le plateau de réaction et le support afin que ledit plateau puisse se déplacer axialement.

Le plateau de réaction est conformé pour porter à sa périphérie interne une partie des moyens de rampes, tandis que le support porte à rotation l'autre partie des moyens de rampes en association avec des moyens de verrouillage à action circonférentielle.

Il peut être souhaitable de simplifier ce type de solution et d'avoir un fonctionnement plus sûr et plus fiable du dispositif de rattrapage d'usure.

Dans ce but, il a déjà été proposé dans la demande de brevet français FR-A-2762060 & WO98/42994 au nom de la demanderesse un embrayage à friction doté d'un plateau de pression de forme simple, tout en simplifiant le dispositif de rattrapage d'usure agissant entre les deux parties du volant, du type comportant un support conformé pour être fixé à un premier arbre, et un plateau de réaction lié en rotation au support par des seconds moyens de liaison en rotation autorisant un déplacement axial du plateau de réaction par rapport au support est caractérisé en ce que le dispositif de rattrapage d'usure comporte, d'une part, des moyens élastiques de compensation à action axiale agissant entre le support et le plateau de réaction et, d'autre part, un dispositif de blocage débrayable à action axiale porté par le plateau de réaction, en ce que le déclencheur agit sur le dispositif de blocage pour, en cas d'usure des garnitures de friction, débrayer ledit dispositif de blocage et autoriser un mouvement du plateau de réaction en direction du plateau de pression pour compenser ladite usure et en ce que les moyens élastiques de compensation exercent une force sur le plateau de réaction supérieure à la force exercée par les moyens embrayeurs sur le plateau de pression.

Grâce à cette conception, le plateau de pression a une forme simple, ainsi que le dispositif de rattrapage d'usure, qui est dépourvu de moyens de verrouillage à action circonférentielle et de moyens de rampes.

L'absence de moyens de rampes rend plus sûr et plus fiable le dispositif de rattrapage d'usure puisque les risques de coincement dus aux moyens de rampes sont supprimés. Le plateau de réaction est donc simplifié puisqu'il est dépourvu de moyens de rampes. Ce plateau de réaction peut être à l'image du plateau de pression et comporter des pattes à sa périphérie externe pour porter au moins un dispositif de blocage débrayable à action axiale. Les usinages du plateau de réaction et du support sont simplifiés.

Toutefois, la conception proposée aboutit à un embrayage dont l'encombrement axial est relativement important et dont le nombre important de composants, résultant notamment des deux séries de moyens de liaison en rotation autorisant un déplacement axial du plateau de réaction et du plateau de pression, en augmente le poids et les coûts de fabrication et d'assemblage.

L'invention a pour but de remédier à ces inconvénients tout en conservant les avantages inhérents à un fonctionnement sûr et fiable du dispositif de rattrapage d'usure.

Dans ce but, l'invention propose un embrayage à friction du type mentionné précédemment, caractérisé en ce que le dispositif de rattrapage d'usure comporte, d'une part, des moyens élastiques de compensation à action axiale agissant entre deux parties avant et arrière, adjacentes axialement, du plateau de pression et, d'autre part, un dispositif de blocage débrayable à action axiale porté par le plateau de pression, en ce que le déclencheur est soumis à l'action du plateau de réaction et agit sur le dispositif de blocage pour, en cas d'usure des garnitures de friction, débrayer le dispositif de blocage et autoriser un mouvement axial relatif de la partie avant du plateau de pression, par rapport à sa partie arrière dans un sens correspondant à une augmentation de l'épaisseur axiale du plateau de pression, pour compenser l'usure, et en ce que les moyens élastiques de compensation exercent une force supérieure à la force exercée par les moyens embrayeurs sur le plateau de pression.

Grâce à l'invention, le dispositif de blocage est débrayé par le déplacement du plateau de pression dû à l'usure.

Le dispositif de rattrapage d'usure est fiable, robuste et ne fait pas appel à des moyens de rampes. Ce dispositif n'est pas sensible à la corrosion et ne risque pas de se coincer compte tenu de l'absence de rampes.

Selon d'autres caractéristiques préférées de l'invention :
- les moyens embrayeurs présentent au moins une rondelle Belleville ;
- les moyens embrayeurs consistent en un diaphragme présentant une partie périphérique en forme de rondelle Belleville prolongée radialement vers l'intérieur par une partie centrale fragmentée en doigts radiaux par des fentes pour formation des moyens débrayeurs ;
- les moyens élastiques de compensation comportent une rondelle élastique à action axiale montée comprimée entre les deux parties du plateau de pression et qui agit globalement sur un diamètre moyen compris entre le diamètre moyen d'appui des moyens embrayeurs sur le fond du couvercle et le diamètre moyen d'appui des moyens embrayeurs sur le plateau de pression ;
- les moyens élastiques de compensation exercent sur la partie arrière du plateau de pression une force supérieure à celle exercée par le diaphragme sur ladite partie arrière.
- la seconde face de friction est formée sur la face frontale avant de la partie avant du plateau de pression, et les moyens embrayeurs prennent appui sur la face dorsale arrière de la partie arrière du plateau de pression ;
- en position embrayée, le diaphragme s'appuie par la périphérie externe de sa rondelle Belleville contre un bossage annulaire porté en saillie axiale par la face dorsale arrière de la partie arrière du plateau de pression ;
- la partie arrière du plateau de pression est réalisée sous la forme d'une rondelle comportant une partie annulaire périphérique externe, décalée axialement vers l'avant, qui est reçue avec jeu dans un logement complémentaire formé dans la face dorsale arrière en vis-à-vis de la partie avant du plateau de pression, et comportant une partie annulaire périphérique interne, décalée axialement vers l'arrière, qui délimite avec une portion en vis-à-vis de la face dorsale arrière de la partie avant du plateau de pression un logement annulaire dans lequel sont agencés les moyens élastiques de compensation à action axiale ;
- les deux parties annulaires périphériques de la partie arrière du plateau de pression sont reliées entre elles par une portion de liaison qui en section axiale, présente un profil coudé dont le sommet est orienté axialement vers l'arrière et s'étend axialement au delà de la face dorsale arrière de la partie périphérique interne pour constituer ledit bossage annulaire ;
- la rondelle élastique est centrée par une portée cylindrique formée dans ladite portion de liaison ;
- les deux parties avant et arrière du plateau de pression sont guidées en coulissement axial l'une par rapport à l'autre ;
- la partie annulaire périphérique interne de la partie arrière du plateau de pression est délimitée par un bord radial interne cylindrique qui est guidé en coulissement axial le long d'une portée cylindrique convexe formée sur une virole de la partie avant du plateau de pression qui s'étend axialement vers l'arrière à partir de la partie centrale de la face dorsale arrière de cette dernière ;
- le dispositif de blocage comporte deux pièces coaxiales dont l'une porte le déclencheur et en ce que l'une des pièces est propre à venir en appui sur une pièce solidaire de l'une des deux parties du plateau de pression ;
- la pièce portant le déclencheur est propre à venir en appui par sa partie avant dirigée vers le support ;
- l'autre pièce du dispositif de blocage est portée par une saillie radiale externe du plateau de pression ;
- le dispositif de blocage comporte deux pièces en relation de cylindre-piston délimitant en elle une chambre à volume variable remplie de graisse ;
- le dispositif de blocage comporte un trou de la saillie du plateau de pression et un piston portant centralement le déclencheur ;
- le déclencheur consiste en une tige guidée par un alésage ménagé dans le piston ;
- la saillie appartient à la partie avant du plateau de pression ;
- l'alésage du piston comporte une partie arrière élargie tournée vers la partie arrière du plateau de pression, et en ce que ladite partie élargie forme un siège pour un élément de fermeture de valve apte à être manoeuvré par la tige constituant le déclencheur ;
- la partie élargie de l'alésage du piston sert de logement à un ressort de tarage prenant appui sur l'élément de fermeture de valve et sur le fond du trou ;
- l'élément de fermeture de valve a une forme sphérique et est d'un seul tenant avec la tige ;
- la saillie consiste en une patte de la partie avant du plateau de pression servant à la fixation d'un jeu de languette(s) élastique(s) appartenant aux moyens de liaison en rotation, ladite patte s'étendant en saillie radiale vers l'extérieur à la périphérie externe du plateau de pression ;
- il est prévu plusieurs dispositifs de blocage répartis régulièrement circonférentiellement ;

D'autres caractéristiques et avantages apparaîtront à la lumière de la description qui va suivre et en regard des dessins annexés dans lesquels :
- la figure 1 est une vue en coupe axiale des principaux composants d'un embrayage à friction selon l'invention ;
- la figure 2 est une vue de détail à plus grande échelle de la partie inférieure de la figure 1 ;
- la figure 3 est une vue de détail à plus grande échelle selon la flèche 1 de la figure 2 qui illustre notamment, en section circonférentielle partielle, les principaux composants du dispositif de rattrapage d'usure.

Par convention, en référence aux figures, on qualifiera par le terme avant les éléments situés ou orientés vers la partie gauche des figures, et par le terme arrière les éléments situés ou orientés vers la partie droite des figures.

Dans ces figures l'embrayage à friction comporte de manière connue un support 1 formant plateau de réaction 3, un plateau de pression 7 et un disque de friction (non représenté sur les figures) doté à sa périphérie externe des garnitures de friction destinées à être serrées, lorsque l'embrayage est engagé, entre des faces de friction en vis-à-vis arrière 31 et avant 21, que présentent dorsalement le plateau de réaction 3 et frontalement le plateau de pression 7 respectivement, tous deux par exemple en fonte.

Ce serrage des garnitures de friction est réalisé ici par des moyens élastiques connus à action axiale 81, formant des moyens embrayeurs, agissant globalement entre la face dorsale 125 du plateau de pression 7 et le fond 90 d'orientation transversale, troué centralement, d'un couvercle annulaire 9 de forme creuse conformé à sa périphérie externe pour être fixé à un plateau de support 1 de manière décrite ci-après.

Le couvercle 9 est ici en tôle emboutie, en variante en fonte, et le plateau 3 en fonte, en variante en acier. Le fond 90 d'orientation transversale est dirigé radialement vers l'intérieur.

Le support 1 est conformé à sa périphérie interne pour être fixé sur un premier arbre, tandis que le disque de friction est conformé à sa périphérie interne pour être lié en rotation à un second arbre.

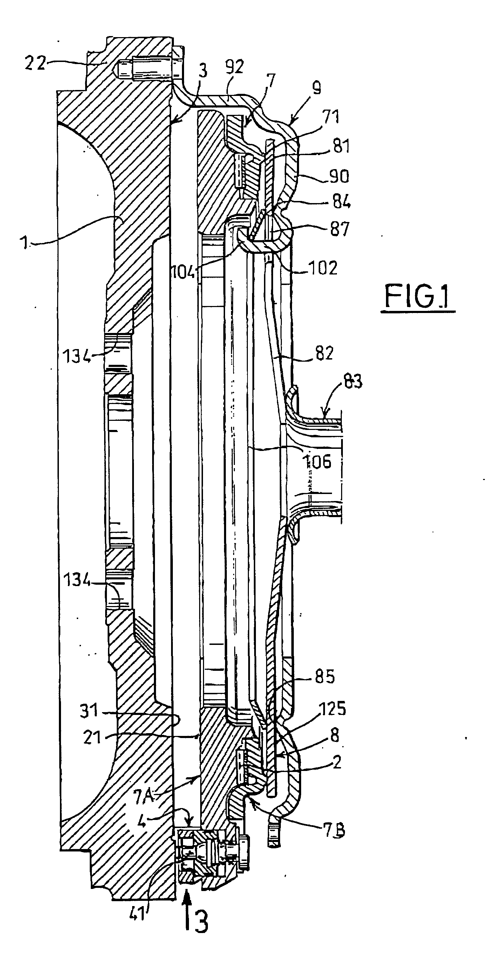

Dans les figures illustrées, l'embrayage à friction est destiné à équiper un véhicule automobile en sorte que le support 1 est destiné à être fixé sur le vilebrequin du moteur du véhicule (dont il constitue le volant d'inertie) constituant le premier arbre, tandis que le second arbre est l'arbre d'entrée de la boîte de vitesses. Par simplicité et clarté on n'a pas représenté ces arbres. ni le moyeu cannelé intérieurement que présente le disque de friction à sa périphérie interne pour sa liaison en rotation à l'arbre d'entrée de la boîte de vitesses, tel que visible dans le document US-A-4,195,719, ni le vilebrequin. Le moyeu peut être relié élastiquement aux garnitures de friction de manière connue et tel que visible à la figure 1 de ce document US-A-4 195 719.

L'embrayage comporte également des moyens débrayeurs 82 associés aux moyens embrayeurs 81 pour action sur les moyens embrayeurs 81 et annulation (relâchement) de la force qu'exercent lesdits moyens embrayeurs 81 sur le plateau de pression 7 pour serrage des garnitures de friction entre les plateaux 3,7.

Ceci est réalisé de manière contrôlée, à l'aide d'une butée de débrayage 83, représentée partiellement à la figure 1, agissant ici en poussant sur l'extrémité interne des moyens débrayeurs 82. On voit en pointillés que les moyens débrayeurs 82 basculent lorsque la butée 83 se déplace axialement vers la gauche de la figure 1. Ce basculement entraîne également un basculement des moyens embrayeurs 81.

Ainsi qu'on le sait, la butée de débrayage est portée par la boîte de vitesses en étant montée coulissante le long d'un tube guide (non représenté) porté par ladite boîte et traversé par l'arbre d'entrée. Elle est commandée mécaniquement à partir d'une pédale de débrayage ou automatiquement à l'aide d'un actionneur pilote selon des programmes prédéterminés à l'aide d'un calculateur.

Plus précisément ici les moyens embrayeurs 81 et débrayeurs 82 appartiennent à une même pièce 8, trouée centralement. Cette pièce 8 est un diaphragme de forme annulaire.

A l'état libre le diaphragme 8 a une forme tronconique et subit des opérations mécaniques et de traitement thermique pour lui donner la forme et l'élasticité voulues. Ce diaphragme 8 comporte une partie périphérique 81 en forme de rondelle Belleville prolongée radialement vers l'intérieur par une partie centrale fragmentée en doigts radiaux 82 par des fentes débouchant intérieurement dans l'ouverture centrale du diaphragme et extérieurement, au voisinage de la périphérie interne de la rondelle Belleville 81, dans un orifice élargi 87. Les fentes sont donc borgnes.

Ainsi qu'on l'aura compris les moyens embrayeurs sont constitués par la rondelle Belleville 81 et les moyens débrayeurs par les doigts 82 formant leviers de débrayage.

De manière connue la courbe caractéristique du diaphragme 8 (force exercée - en fonction de la déflexion) dépend de son épaisseur et de la hauteur de son tronc de cône. Cette courbe croît jusqu'à un maximum, puis décroît pour ensuite de nouveau croître.

Ici le diaphragme 8 est monté de manière pivotante entre un appui primaire 85 porté par le couvercle 9 et un appui secondaire porté par des pattes 102 issues par découpe et pliage du fond 90 du couvercle 9. Ces pattes 102 traversent chacune l'orifice élargi 87 et sont rabattues radialement vers l'extérieur à leur extrémité libre, pour formation d'un coude de calage 104 pour une couronne 106 de forme tronconique dont l'arête externe est arrondie pour formation de l'appui secondaire 84.

En position embrayage engagé le diaphragme 8 s'appuie par la périphérie interne de sa rondelle Belleville 81 sur l'appui primaire 85 et par la périphérie externe de sa rondelle Belleville 81 sur un bossage annulaire 71 porté en saillie axiale par la face dorsale arrière 125 du plateau de pression 7. Le bossage 71 est dirigé vers le fond 90 du couvercle 9. Ainsi le diaphragme 8 exerce normalement une action de serrage sur les garnitures de friction pour serrer celles-ci entre les faces 31,21.

En position embrayage désengagé le diaphragme 8 prend appui sur l'appui secondaire 84. Ce changement d'appui est réalisé de manière contrôlée à l'aide de la butée de débrayage 83, qui agit en poussant sur l'extrémité interné des doigts 82 du diaphragme 8. Lors de la manoeuvre (débrayage de l'embrayage) le diaphragme 8 bascule.

Ici l'appui primaire 85 est réalisé par emboutissage du fond 90 du couvercle 9. En variante il peut consister en un jonc.

Le document US 4,195,719 précité auquel on se reportera pour plus de précisions. montre par ailleurs d'autres formes de réalisation envisageables pour monter l'appui secondaire 84 sur le couvercle 8.

Dans tous les cas des moyens d'assemblage sont prévus pour montage basculant du diaphragme 8 sur le couvercle 9. Ces moyens comportent l'appui primaire 85, l'appui secondaire 84 et les pattes précitées 102, ou des colonnettes.

Conformément à un aspect de l'invention, le plateau de pression 7 est réalisé en deux parties adjacentes axialement, c'est à dire une partie principale avant 7A qui est une partie massive en fonte constituant le plateau de pression proprement dit dont la face frontale avant dressée constitue la face avant 21 de friction du plateau de pression, et une partie complémentaire arrière 7B en forme d'anneau en tôle emboutie et qui comporte notamment le bossage annulaire 71 sur lequel agit le diaphragme 8.

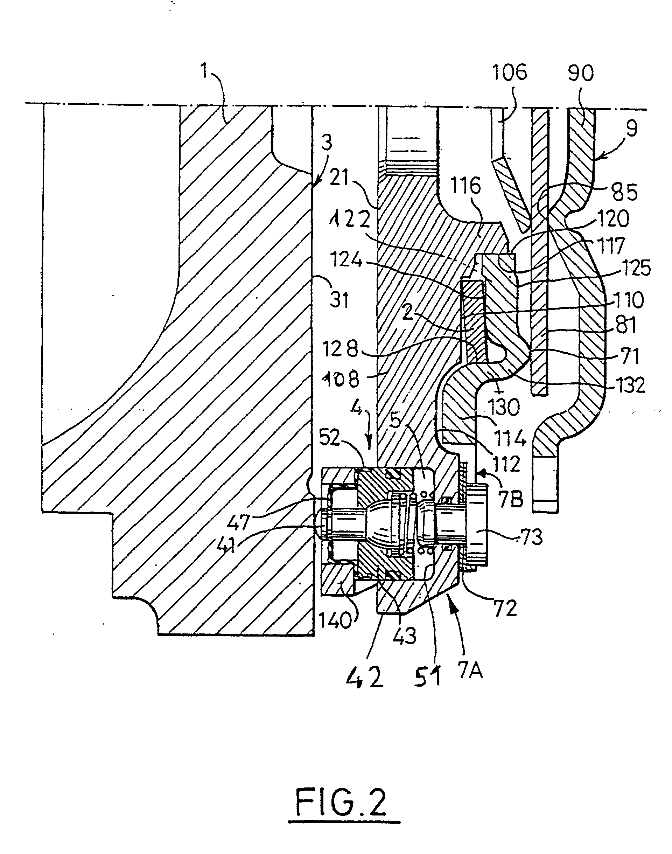

Comme on peut le voir aux figures 1 et 2, la partie principale annulaire 108 de la partie avant 7A est amincie à sa périphérie radiale externe pour délimiter dans sa face dorsale arrière 110 un logement dans lequel est reçue avec jeu la partie annulaire périphérique externe en forme d'anneau plat 114 de la partie arrière 7B du plateau de pression 7.

La face dorsale arrière 110 est une face dressée décalée axialement vers l'arrière par rapport au fond axial du logement 112 et qui se prolonge, au voisinage de sa périphérie interne, par une virole 116 d'orientation axiale arrière et dont la surface périphérique externe 117 est usinée pour constituer une portée cylindrique convexe sur laquelle coulisse le bord radial interne 120 de la partie annulaire périphérique interne 122, en forme d'anneau plat de la partie arrière complémentaire 7B du plateau de pression en deux parties.

Comme on peut le voir à la figure 2, la partie périphérique interne 122 est décalée axialement vers l'arrière par rapport à la partie périphérique externe 114 de manière à délimiter, entre les surfaces d'orientation radiale en vis-à-vis 110 de la partie avant 7A et 124 de la partie périphérique interne 122 de la partie arrière 7B, un logement de forme générale annulaire dans lequel est reçue une rondelle élastique 2 à action axiale qui est montée comprimée entre les surfaces 110 et 124 et qui sollicite en permanence les deux parties avant 7A et arrière 7B en éloignement l'une de l'autre.

La rondelle élastique constitue des moyens élastiques de compensation à action axiale appartenant au dispositif de rattrapage d'usure selon l'invention.

Comme on peut le voir à la figure 2, la rondelle élastique est centrée radialement vers l'intérieur le long d'une surface cylindrique concave 128 appartenant à un pli 130, d'orientation globalement axiale qui relient entre elles les parties périphériques externe 114 et interne 122 de la partie arrière 7B.

On voit aussi sur cette figure que le pli 130, en section axiale, comporte un coude 132 de raccordement dont le sommet convexe est orienté axialement vers l'arrière et fait saillie axialement au delà de la face dorsale arrière 125 de la partie périphérique interne 122 pour constituer le bossage annulaire 71 pour le diaphragme 8.

Des moyens de liaison en rotation 72 sont prévus pour lier en rotation le plateau de pression la partie avant 7A du plateau de pression 7 au couvercle 9 avec possibilité de déplacement axial.

Ces moyens consistent ici en des languettes élastiques 72 réparties en plusieurs jeux dont le nombre dépend des applications. Une ou plusieurs languettes superposées peuvent être prévues pour chaque jeu.

Ces languettes 72 sont ici d'orientation tangentielle et sont fixées à l'une de leurs extrémités chacune par un rivet 73 à une patte 75 allongée circonférentiellement que présente le plateau de pression 7, en saillie radiale vers l'extérieur, à sa périphérie externe.

A leur autre extrémité les languettes 72 sont fixées par rivetage en 74 au couvercle 9. Le fond 90 du couvercle 9 est prolongé à sa périphérie externe par une jupe cylindrique 92 d'orientation axiale. Cette jupe 92 est localement échancrée et est prolongée à son extrémité libre par un rebord transversal 93,94 dirigé radialement vers l'extérieur.

C'est par l'intermédiaire de ce rebord 93,94 que le couvercle 9, est fixé à sa périphérie externe sur le support 1. Le couvercle 9 entoure ici le diaphragme et le plateau de pression 7 en deux parties.

Les moyens de fixation consistent ici en une pluralité de vis non représentées dont les têtes prennent appui sur une plage radiale 93 de fixation du rebord 93,94 pour venir se visser dans le support 1. Des pions de centrage non représentés peuvent être prévus pour centrer le rebord 93,94.

Ici le rebord 93,94 comporte deux séries de plages 93,94 décalées axialement. Les plages 93 précitées servent à la fixation du couvercle 9 sur le support 1, tandis que les plages 94, plus proches axialement du fond 90, servent à la fixation des languettes 72 à l'aide des rivets 74.

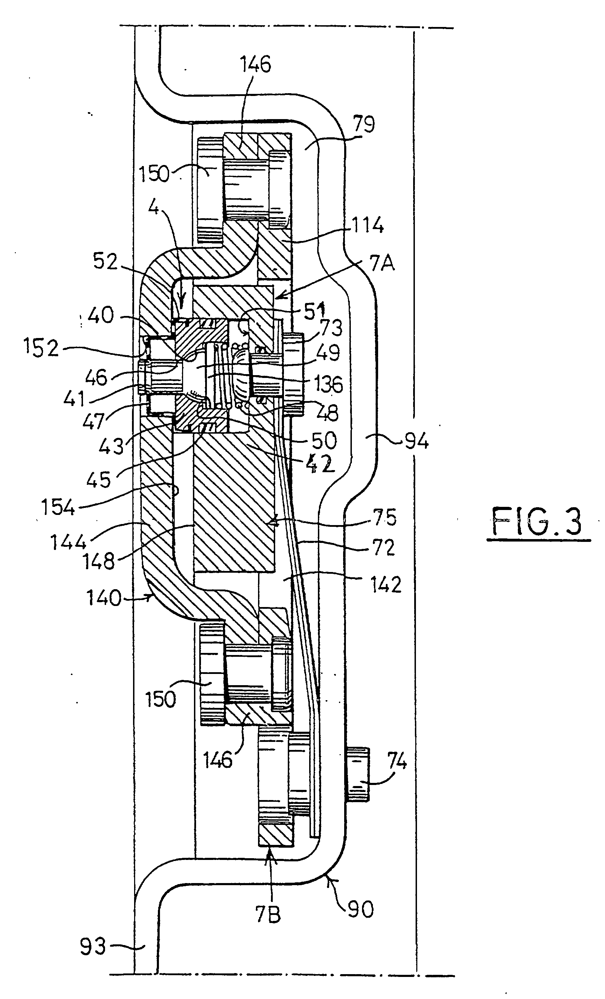

Comme visible à la figure 3 deux plages 93 consécutives sont reliées entre elles par une plage 94 pour définir une première échancrure 79 permettant le passage d'une patte 75 du plateau de pression.

De manière connue ces languettes élastiques 72 forment des moyens élastiques de rappel exerçant une action de rappel élastique du plateau de pression 7 en direction du fond 90 du couvercle et permettent ainsi, lorsque l'embrayage est désengagé, une bonne libération des garnitures de friction.

Ainsi qu'on l'aura compris le couvercle 9, le diaphragme 8 et le plateau de pression 7 en deux parties 7A et 7B forment, grâce aux languettes 72, un ensemble unitaire dit mécanisme d'embrayage.

On notera que le support 1 présente centralement des ouvertures 134 visibles à la figure 1. Ces ouvertures sont aptes à être traversées par des vis non représentées permettant la fixation du support 1, ici au vilebrequin, en sorte que ce support 1 est conformé à sa périphérie interne pour être fixé à un premier arbre. Le support 1 est donc fixe axialement et tourne avec le moteur du véhicule dont il constitue aussi le volant d'inertie.

Le support 1 est épaissi à sa périphérie externe pour formation d'un rebord périphérique 22 annulaire d'orientation axiale. Ce rebord 22 est ici taraudé et est percé pour montage des vis et des pions de centrage du couvercle 9.

Suivant une caractéristique de l'invention un dispositif de rattrapage d'usure 2,4 est monté au sein du plateau de pression 7 en deux parties 7A et 7B. Ce dispositif permet, notamment, de compenser les jeux dus à l'usure des garnitures de friction et, dans une moindre mesure, dus à l'usure des faces de friction 21,31. Lorsque lesdites garnitures s'usent, le plateau de pression 7 se « rapproche » globalement du plateau de réaction 3 en sorte que la position du diaphragme varie lorsque l'embrayage est engagé.

Le dispositif de rattrapage d'usure a pour objet de compenser les usures et maintenir la position du diaphragme 8 sensiblement constante lorsque l'embrayage est engagé. La charge exercée par le diaphragme 8 sur le plateau de pression 7 (embrayage engagé) sera également globalement constante dans cette position embrayage engagé.

La courbe caractéristique, au niveau de la butée de débrayage 83 (force exercée par la butée sur l'extrémité des doigts 82 en fonction de la course de débrayage), sera sensiblement constante.

Le dispositif de rattrapage d'usure est, suivant une caractéristique, dépourvu de moyens de rampes. C'est pour cette raison que le plateau de pression 7 est réalisé en deux parties 7A et 7B.

Selon l'invention les moyens élastiques de compensation 2 à action axiale agissent axialement en direction opposée par rapport au diaphragme 8, c'est-à-dire de manière antagoniste.

Les moyens élastiques de compensation appartiennent au dispositif de rattrapage d'usure et consistent ici en une rondelle élastique 2 présentant une courbe caractéristique linéaire.

La charge exercée par la rondelle de compensation 2 sur la partie 7B est supérieure à la charge exercée par le diaphragme 8 sur la partie 7B.

Le dispositif de rattrapage d'usure comporte également un déclencheur 41 sensible à l'état d'usure des garnitures de friction ainsi que dans une moindre mesure à l'usure des plateaux de réaction 3 et de pression 7, plus précisément sensible à l'usure des faces de friction 21,31.

Le déclencheur 41 est implanté sur un diamètre supérieur à celui des moyens élastiques de compensation 2.

Le déclencheur 41 est ici commandé par le plateau de réaction 3, plus précisément par la périphérie externe de la face de friction 31 du plateau de pression 3. Le déclencheur 41 est en butée contre ladite face de friction 31 qui constitué une butée de réaction mobile en fonction de l'usure, notamment des garnitures

Le déclencheur 41 coopère avec un dispositif de blocage débrayable 4 à action axiale logé ici dans un trou borgne 5 réalisé dans la patte 75 de la partie avant 7A du plateau de pression 7. Le trou 5 est ouvert axialement en direction du plateau de réaction 3.

Le dispositif de blocage débrayable 4 est donc porté par le plateau de pression fixe en rotation et mobile axialement grâce aux languettes 72.

On notera que le fond 51 du trou 5 forme une butée de commande pour donc le dispositif de blocage 4. Cette butée 51 est fixe en rotation et mobile axialement.

Ce dispositif 4 comporte deux pièces 42,43 coaxiales en relation de cylindre-piston définissant entre elles à la faveur du trou 5 une cavité ou chambre de volume variable remplie ici de graisse ou de tout autre agent pâteux ou visqueux, de préférence à forte viscosité.

L'une 42 des pièces 42,43 formant cylindre est constituée par la partie 42 de la patte 75 dans laquelle est usiné le trou borgne cylindrique 5.

Cette pièce creuse 42-5 sert de logement à la pièce mobile 43, dite ci-après piston. Le piston 43 a une forme complémentaire de celle du trou 5 formant cylindre, la périphérie externe du piston 43 étant en contact intime avec l'alésage interne du cylindre c'est-à-dire avec la périphérie interne du cylindre. Le piston 43 est mobile axialement par rapport au cylindre 42.

Un joint d'étanchéité 45 intervient entre l'alésage interne du cylindre et la périphérie externe du piston 43. Ici le joint 45 est porté par le piston 43 présentant pour ce faire à sa périphérie externe une gorge de logement du joint 45, permettant de rendre étanche la chambre 44.

Dans la forme de réalisation le trou borgne 5 est de forme cylindrique à section circulaire, en variante carrée.

Le cylindre 42 et le piston 43 ont donc ici en section une forme cylindrique à section circulaire, en variante carrée.

Le piston mobile 43 de la cartouche porte centralement le déclencheur 41 et présente à cet effet centralement un alésage 46 de guidage du déclencheur 41 faisant saillie axialement par rapport au piston 43 et ce en direction axiale avant vers le plateau de pression 3.

A son extrémité avant, dirigée vers le support 1, le piston 43 porte un soufflet 47 globalement en forme de U en section. A son extrémité axiale arrière 136, le déclencheur 41 en forme d'aiguille ou de tige de valve, est sollicité élastiquement vers l'avant en direction du plateau de réaction 3 par un ressort de tarage 48 monté comprimé entre l'extrémité 136 et le fond arrière du trou 5, le ressort 48 étant avantageusement maintenu coaxial et centré par rapport au déclencheur par la tête du rivet 73 sertie à l'intérieur de la cavité 5.

La partie centrale 49 du déclencheur 41 constitue un élément de fermeture de valve de profil sphérique qui coopère avec un siège 40 qui prolonge vers l'arrière, de manière élargie, l'alésage 46 de guidage de la tige 41.

En variante l'élément de fermeture de valve 49 peut être une bille distincte de la tige 41. Dans tous les cas la valve 49 est apte à être manoeuvrée par la tige 41.

C'est dans une partie arrière élargie et débouchante de l'alésage 46 que se logent également le ressort 48.

La cavité ou chambre de volume variable est délimitée, d'une part, axialement par le piston 43 et le fond transversal du cylindre 5 et, d'autre part, latéralement par la paroi latérale cylindrique du trou 5.

Le soufflet 47 qui constitue une réserve à graisse empêchant de polluer les garnitures de friction et les surfaces de friction 21 et 31, est fixé ici par sertissage de ses pattes 52 au piston 43.

La branche centrale, d'orientation radiale du support en U 47 est emboîtée dans une rainure de la tige du déclencheur 41 pour constituer un sous ensemble, mais le support est déformable élastiquement pour permettre une course relative réduite du déclencheur 41 par rapport au piston 43, pour provoquer l'ouverture de la valve par décollement de l'élément 49 de son siège 40.

Le dispositif de blocage 4 agit axialement entre les deux parties 7A et 7B du plateau de pression. Plus précisément, le dispositif de blocage 4 agit entre la partie 42 de la patte 75 de la partie avant 7A du plateau de pression 7 et une pièce de fermeture ou de bouclage 140 fixée à la partie complémentaire arrière 7B du plateau de pression 7.

Comme on peut le voir à la figure 3, la partie périphérique externe 114 de la partie arrière 7B comporte une échancrure 142 d'orientation circonférentielle permettant le passage de la patte 75 pour permettre des déplacements axiaux relatifs entre ces deux éléments. La pièce de fermeture 140 solidaire de la partie 114 est un cavalier dont la plaque principale 144, d'orientation radiale, est parallèle à la partie 114 et s'étend en regard de la face frontale avant 148 de la patte 75 avec jeu axial par rapport à cette dernière. Le cavalier de fermeture 140 est fixé à la partie 114 de la partie arrière 7B du plateau de pression 7 par deux rivets 150 qui traversent des pattes 146 du cavalier.

La plaque principale 144 du cavalier 140 comporte, en regard du dispositif de blocage 4, un trou axial débouchant 152 dans lequel s'étendent le soufflet 47 et la tige de déclencheur 41 de manière que l'extrémité axiale libre avant de cette dernière fasse saillie axialement vers l'avant au delà de la plaque 144 pour coopérer avec le plateau de réaction 3, 31.

La face arrière interne 154 de la plaque 144, dans sa partie entourant le trou 152 constitue une surface d'appui axiale pour la face annulaire d'extrémité libre avant du piston 43 qui est sollicitée en permanence vers cette surface 154 par le ressort 48 et la tige 41.

Lorsque la valve 49-40 est fermée, le piston 43 constitue donc une butée axiale pour le cavalier 140, et donc pour la partie arrière 7B, qui empêche tout déplacement axial vers l'arrière de la partie arrière 7B par rapport à la partie avant 7A du plateau de pression 7, et ceci malgré l'action des moyens élastiques de compensation 2.

Le dispositif de rattrapage d'usure 2,4 à déclencheur 41 fonctionne de la manière suivante :

En position embrayage engagé, garnitures de friction neuves, le diaphragme 8 serre les garnitures entre les plateaux de pression 7-7A et de réaction 3 du fait que les moyens élastiques de compensation 2 exercent ici une force supérieure à celle du diaphragme 8. Les languettes 72 permettent un entraînement en rotation du plateau 7 avec liberté de mouvement axial.

On notera que les moyens de blocage 4 sont alors verrouillés c'est-à-dire que la valve 49 est en appui sur son siège 40.

Lorsque les garnitures de friction s'usent, le plateau de pression 7 tend à se déplacer globalement en direction du plateau de réaction 3 du fait que la distance entre les deux plateaux diminue avec l'usure.

Néanmoins la partie avant 7A du plateau de pression ne peut se déplacer axialement vers l'avant à cause du dispositif de blocage 4 alors verrouillé.

Le plateau de réaction 3 agit alors sur le déclencheur 41 pour se « rapprocher » du plateau de pression 7A..

La force exercée par le diaphragme 8 sur le plateau de pression 7 et le déclencheur augmente du fait que la position du diaphragme 8 tend à se modifier. Dès que l'augmentation de force est suffisante pour vaincre la force exercée par le ressort de rappel 48 sur l'élément de fermeture de valve 49, ladite valve quitte son siège 40 en sorte que le piston 43 se déplace axialement vers l'arrière, c'est à dire vers l'intérieur du trou 5 et de la graisse peut s'écouler entre le siège 40 et l'élément de valve 49 vers le soufflet formant réservoir 47 sans polluer les garnitures de friction, ce qui nuirait à la transmission du couple.

Sous l'action des moyens compensateurs 2, les deux parties 7A et 7B du plateau de pression 7 peuvent alors se déplacer axialement en éloignement l'une de l'autre dans le sens correspondant à une augmentation de l'épaisseur axiale globale du plateau de pression.

La tige 41 (le déclencheur) suit ce mouvement en sorte que la valve 49 se referme. Ceci est réalisé de manière continue fiable et sûre, sans risque de coincement du fait de l'absence de moyens de rampes facilitant la fabrication du plateau de pression 7. En outre, en cas de surcourse du diaphragme lors de l'opération de débrayage, le diaphragme quitte l'appui 71 sans qu'un rattrapage supplémentaire se produise du fait que la valve 49 est refermée. On rattrape uniquement l'usure détectée. En outre, le dispositif de rattrapage d'usure n'est pas sensible aux vibrations du vilebrequin.

Dans tous les cas la valve 49 se referme lorsque l'on débrayage, le déclencheur 41 n'étant plus soumis à l'action du plateau de réaction, en sorte que le ressort 48 referme la valve.

En cas d'usure le déclencheur 41 (la tige) se déplace en étant guidée axialement par l'alésage 46 du piston 43. La valve s'ouvre en sorte que la partie avant 7A du plateau de pression 7 se déplace vers le support 1, tandis que la partie arrière 7B conserve sa position par rapport au fond 90, pour compenser les usures.

Les moyens embrayeurs et débrayeurs, de manière précitée, peuvent consister en une ou plusieurs rondelles Belleville montées en série et associées à un faux diaphragme comme visible dans le document FR 96 11009 déposé le 6 septembre 1996 et comme mentionné ci-dessus.

En variante les moyens embrayeurs peuvent comporter un ressort à boudin de forme tronconique, agissant entre le couvercle et la butée de débrayage, propre à agir alors du des leviers de débrayage.

Le dispositif de blocage 4 comporte deux pièces coaxiales, mobiles l'une par rapport à l'autre, dont l'une porte le déclencheur 41, et susceptibles de se déplacer axialement dans un seul sens, l'une par rapport à l'autre et ce de manière débrayable sous l'action de la tige 41 (le déclencheur). Pour cela on peut adopter les dispositions décrites dans le document FR-A-2 426 834 figures 4,5,8 et 9 sachant que c'est le plateau de pression 7 qui porte le dispositif de blocage. Le trou 5 n'est pas forcément borgne et peut être doublé intérieurement par une coupelle formant cylindre.

Les moyens de liaison en rotation 72 peuvent être, de manière précitée, du type tenons-mortaises.

L'embrayage peut comporter plusieurs disques de friction et plusieurs plateaux de pression.

Deux dispositifs 4, diamétralement opposés peuvent être prévus. D'une manière générale on cherche à avoir une répartition régulière circonférentielle des dispositifs de blocage pour équilibrer le plateau de pression 7 et éviter tout coincement des déclencheurs 4.

Le dispositif de blocage 4 est porté d'une manière générale par une saillie radiale dirigée vers l'extérieur, que présente la partie avant 7A du plateau de pression 7 à sa périphérie externe. Cette saillie est dans les figures la patte 75, mais en variante peut consister en une patte supplémentaire, la patte 75 étant raccourcie circonférentiellement.

Bien entendu le bossage 71 formant appuis annulaire, peut être remplacé par un jonc ou tout autre cordon.

Bien entendu l'embrayage peut être du type tiré la périphérie externe de la rondelle Belleville 81 prenant alors appui sur le couvercle, tandis que la périphérie interne de ladite rondelle Belleville est alors en appui sur le bossage du plateau de pression.

Ainsi qu'il ressort à l'évidence de la description et des dessins la chambre délimitée par les pièces 42, 43 à la faveur du trou 5 est à volume variable, le volume de cette chambre diminuant avec les usures avec transfert de graisse dans le soufflet 47.

Bien entendu les languettes 72 exercent une force de rappel négligeable par rapport aux ressorts 8,2 (les moyens embrayeurs et de compensation).

Des moyens de progressivité sont prévus usuellement entre les garnitures. On n'a pas tenu compte de ceux-ci, ici par simplicité. Néanmoins, lorsque l'embrayage est engagé, ces moyens exercent sur le plateau de pression 7 une force inférieure à celle exercée par les moyens de compensation 2 pour éviter un rattrapage d'usure.

Dans cette position les moyens de progressivité sont écrasés totalement ou partiellement par les moyens embrayeurs 81.

En cas de surcourse du diaphragme lors de l'opération de débrayage, le dispositif de rattrapage d'usure n'intervient pas.

Ce dispositif n'est pas sensible aux phénomènes de la force centrifuge, ou vibrations axiales, et rattrape l'usure mesurée.

Le support 1 peut avoir toutes les formes. Il peut être en deux parties, par exemple, un flasque fixé sur le vilebrequin du moteur et portant un plateau de réaction pour formation d'un volant flexible comme décrit par exemple dans le document FR-A-1 257 799.

En variante, il comporte deux masses accouplées par dispositif amortisseur de torsion, l'une des masses formant le plateau de réaction. Comme décrit par exemple dans le document FR 97/12115. Déposé le 30 septembre 1997.

Bien entendu, il faut tenir compte de l'élasticité que présente le disque de friction au niveau de ses garnitures. Un disque de friction comporte usuellement deux garnitures fixées par rivetage sur au moins un support élastique. Ici, ce disque de friction présente avantageusement deux garnitures de friction fixés sur au moins un support par une liaison dépourvue de rivets ce qui permet, pour la même quantité de garniture à user, de diminuer l'encombrement axial.

Ainsi, le disque de friction peut comporter deux garnitures de friction fixées par exemple par collage ou brasage chacune sur un support métallique. Un élément de progressivité, par exemple en matière élastomère, est interposé axialement entre les deux supports métalliques en étant fixé sur l'un au moins des deux supports.

Pour plus de précisions, on se reportera au document WO 95/ 154480.

Ainsi, le disque de friction est moins encombrant axialement. Grâce à cette disposition, l'embrayage équipé du dispositif de rattrapage d'usure selon l'invention peut avoir le même encombrement axial qu'un embrayage classique. On peut même réduire l'encombrement car le dispositif de rattrapage d'usure, selon l'invention, est peut encombrant axialement. Il est moins encombrant axialement qu'un dispositif de rattrapage d'usure à rampes et contre-rampes.

Ce disque de friction permet de remplacer le support 1 par un support à deux masses accouplées entre elles par exemple par des organes élastiques à action radiale, l'une des masses, dite seconde masse, étant montées rotative sur l'autre masse, par l'intermédiaire de moyens de pallier tel qu'un roulement à billes.

Les deux masses comportent deux plateaux écartés axialement l'un de l'autre. Les organes élastiques sont montés dans des cassettes articulées à leur périphérie externe sur le plateau de la première masse et à leur périphérie interne sur un moyeu interne de la seconde masse comportant un plateau de réaction avec éventuellement intervention d'un limiteur de couple.

Les organes élastiques sont montés par exemple dans des cassettes articulées sur le plateau de la première masse destinée à être fixée sur le vilebrequin, et sur le moyeu interne de la seconde masse portant le plateau de réaction comme décrit dans le document FR 97/12115 précité.

## Revendications

1. Embrayage à friction, comportant un support (1) formant, plateau de réaction (3), conformé pour être fixé à un premier arbre, une première face de friction (31) ménagée sur une face dorsale arrière du plateau de réaction (3), au moins un disque de friction conformé pour être lié en rotation à un second arbre et doté à sa périphérie externe de garnitures de friction , un couvercle (9) doté d'un fond (90) d'orientation transversale et troué centralement, des moyens de fixation pour fixation du couvercle (9) sur le support (1), un plateau de pression (7) lié en rotation au couvercle (9) par des moyens (72) de liaison en rotation autorisant un déplacement axial du plateau de pression (7) par rapport au couvercle (9), une seconde face de friction (21) ménagée sur la face frontale avant du plateau de pression (7) tournée vers la première face de friction (31), des moyens embrayeurs (81) prenant appui sur le fond (90) du couvercle (9) et sur une face dorsale arrière (71, 125) du plateau de pression (7) tournée vers le fond (90) du couvercle (9) pour serrage des garnitures de friction entre les première (21) et seconde (31) faces de friction, des moyens débrayeurs (82) associés aux moyens embrayeurs (81) pour relâcher l'action de serrage de ceux-ci, un dispositif de rattrapage d'usure (2,4) pour compenser au moins l'usure des garnitures de friction , et un déclencheur (41) pour piloter la mise en action du dispositif de rattrapage d'usure (2,4), **caractérisé en ce que** le dispositif de rattrapage d'usure (2,4) comporte d'une part des moyens élastiques de compensation (2) à action axiale agissant entre deux parties avant (7A) et arrière (7B), adjacentes axialement, du plateau de pression (7, 7A) et, d'autre part, un dispositif de blocage (4) débrayable à action axiale porté par le plateau de pression (7), **en ce que** le déclencheur (41) est soumis à l'action du plateau de réaction (3) et agit sur le dispositif de blocage (4) pour, en cas d'usure des garnitures de friction (11), débrayer ledit dispositif de blocage et autoriser un mouvement axial relatif de la partie avant (7A) du plateau de pression, par rapport à sa partie arrière (7B) dans un sens correspondant à une augmentation de l'épaisseur axiale du plateau de pression (7), pour compenser ladite usure, et **en ce que** les moyens élastiques de compensation (2) exercent une force supérieure à la force exercée par les moyens embrayeurs (81) sur le plateau de pression (7).

2. Embrayage selon la revendication 1 , **caractérisé en ce que** les moyens embrayeurs (81) présentent au moins une rondelle Belleville.

3. Embrayage selon la revendication 2, **caractérisé en ce que** les moyens embrayeurs (81) consistent en un diaphragme (2) présentant une partie périphérique (81) en forme de rondelle Belleville prolongée radialement vers l'intérieur par une partie centrale fragmentée en doigts radiaux (82) par des fentes pour formation des moyens débrayeurs (82).

4. Embrayage selon la revendication 2, **caractérisé en ce que** les moyens élastiques de compensation (2) comportent une rondelle élastique à action axiale montée comprimée entre les deux parties (7A, 7B) du plateau de pression (7) et qui agit globalement sur un diamètre moyen compris entre le diamètre moyen d'appui des moyens embrayeurs (81) sur le fond (90) du couvercle (9) et le diamètre moyen d'appui des moyens embrayeurs (81) sur le plateau de pression (7, 7B, 71).

5. Embrayage selon la revendication 3, **caractérisé en ce que** la seconde face de friction (31) est formée sur la face frontale avant de la partie avant (7A) du plateau de pression (7), et **en ce que** les moyens embrayeurs (81) prennent appui sur la face dorsale arrière (125, 71) de la partie arrière (7B, 122) du plateau de pression (7).

6. Embrayage selon la revendication précédente, **caractérisé en ce que**, en position embrayée, le diaphragme (8) s'appuie par la périphérie externe de sa rondelle Belleville (81) contre un bossage annulaire (71) porté en saillie axiale par la face dorsale arrière (122, 125) de la partie arrière (7B) du plateau de pression (7)

7. Embrayage selon la revendication 6, **caractérisé en ce que** la partie arrière (7B)du plateau de pression (7) est réalisée sous la forme d'une rondelle comportant une partie annulaire périphérique externe, décalée axialement vers l'avant, qui est reçue avec jeu dans un logement complémentaire formé dans la face dorsale arrière en vis-à-vis de la partie avant (7A) du plateau de pression, et comportant une partie annulaire périphérique interne (122), décalée axialement vers l'arrière, qui délimite avec une portion en vis-à-vis (110) de la face dorsale arrière de la partie avant (7A) du plateau de pression (7) un logement annulaire dans lequel sont agencés les moyens élastiques de compensation à action axiale (2).

8. Embrayage selon la revendication précédente, **caractérisé en ce que** les deux parties annulaires périphériques (114, 122) de la partie arrière (7B) du plateau de pression sont reliées entre elles par une portion de liaison (130) qui, en section axiale, présente un profil coudé (132) dont le sommet est orienté axialement vers l'arrière et s'étend axialement au delà de la face dorsale (125) arrière de la partie périphérique interne (122) pour constituer ledit bossage annulaire (71).

9. Embrayage selon la revendication précédente, **caractérisé en ce que** la rondelle élastique (2) est centrée par une portée cylindrique (128) formée dans ladite portion de liaison (130).

10. Embrayage selon la revendication 7, **caractérisé en ce que** les deux parties avant (7A) et arrière (7B) du plateau de pression (7) sont guidées en coulissement axial l'une par rapport à l'autre.

11. Embrayage selon la revendication précédente, **caractérisé en ce que** la partie annulaire périphérique interne (122) de la partie arrière (7B) du plateau de pression (7) est délimitée par un bord radial interne cylindrique (120) qui est guidé en coulissement axial le long d'une portée cylindrique convexe (117) formée sur une virole (116) de la partie avant (7A) du plateau de pression (7) qui s'étend axialement vers l'arrière à partir de la partie centrale de la face dorsale arrière de cette dernière.

12. Embrayage selon la revendication 1, **caractérisé en ce que** le dispositif de blocage (4) comporte deux pièces coaxiales (42,43) dont l'une (43) porte le déclencheur (41), et **en ce que** l'une des pièces est propre à venir en appui sur une pièce solidaire de l'une des deux parties (7A, 7B) du plateau de pression (7).

13. Embrayage selon la revendication 12, **caractérisé en ce que** la pièce (43) portant le déclencheur est propre à venir en appui par sa partie avant dirigée vers le support (1).

14. Embrayage selon la revendication 13, **caractérisé en ce que** l'autre pièce (42) du dispositif de blocage (4) est portée par une saillie radiale externe (75) du plateau de pression (7).

15. Embrayage selon la revendication 12, **caractérisé en ce que** le dispositif de blocage comporte deux pièces (42-5,43) en relation de cylindre-piston délimitant en elle une chambre à volume variable (44) remplie de graisse.

16. Embrayage selon la revendication 15, **caractérisé en ce que** le dispositif de blocage (4) comporte un trou (5) de la saillie (75) du plateau de pression (7) et un piston (43) portant centralement le déclencheur (41).

17. Embrayage selon la revendication 16, **caractérisé en ce que** le déclencheur consiste en une tige (41) guidée par un alésage (46) ménagé dans le piston (43).

18. Embrayage selon la revendication 14, **caractérisé en ce que** ladite saillie (75) appartient à la partie avant (7A) du plateau de pression (7).

19. Embrayage selon la revendication 18, **caractérisé en ce que** l'alésage (46) du piston (43) comporte une partie arrière élargie (50) tournée vers la partie arrière (7B) du plateau de pression, et **en ce que** ladite partie élargie délimite un siège (40) pour un élément de fermeture de valve (49) apte à être manoeuvré par la tige (41) constituant le déclencheur.

20. Embrayage selon la revendication précédente, **caractérisé en ce que** ladite partie élargie de l'alésage (46) du piston (43) sert de logement à un ressort de tarage (48) prenant appui sur l'élément de fermeture de valve (49) et sur le fond du trou (5).

21. Embrayage selon la revendication 19, **caractérisé en ce que** l'élément de fermeture de valve (49) a une forme sphérique et est d'un seul tenant avec la tige (41).

22. Embrayage selon la revendication 18, **caractérisé en ce que** ladite saillie consiste en une patte (75) de la partie avant (7A) du plateau de pression servant à la fixation d'un jeu de languette(s) élastique(s) (72) appartenant aux moyens de liaison en rotation, ladite patte (75) s'étendant en saillie radiale vers l'extérieur à la périphérie externe du plateau de pression (7, 7A).

23. Embrayage selon la revendication 1, **caractérisé en ce qu'**il est prévu plusieurs dispositifs de blocage (4) répartis régulièrement circonférentiellement.

## Claims

1. A friction clutch including a support (1) defining a reaction plate (3) and configured to be fixed to a first shaft, a first friction face (31) formed on a dorsal face on the rear of the reaction plate (3), at least one friction disc so configured as to be coupled in rotation to a second shaft and provided with friction liners at its outer periphery, a cover plate (9) having a base (90) which is oriented transversely and formed with a central hole, fastening means for fastening the cover plate (9) on the support (1), a pressure plate (7) coupled in rotation to the cover plate (9) by rotational coupling means (72) which permit axial displacement of the pressure plate (7) with respect to the cover plate (9), a second friction face (21) formed on the front face of the pressure plate (7) which faces towards the first friction face (31), clutch engaging means (81) bearing on the base (90) of the cover plate (9) and on a dorsal face (71, 125) on the rear of the pressure plate (7) facing towards the base (90) of the cover plate (9), for gripping the friction liners between the first friction face (21) and the second friction face (31), declutching means (82) associated with the clutch engaging means (81) for releasing the gripping action of the latter, a wear compensating device (2, 4) for compensating for wear in at least the friction liners, and a trigger device (41) for controlling activation of the wear compensating device (2, 4), **characterised in that** the wear compensating device (2, 4) comprises, firstly, axially acting resilient compensating means (2) acting between two axially adjacent parts of the pressure plate (7, 7A), namely a front part (7A) and a rear part (7B), and secondly, a disengageable, axially acting stop means (4) carried by the pressure plate (7), **in that** the trigger device (41) is subjected to the action of the reaction plate (3) and acts on the stop means (4) whereby, in the event of wear in the friction liners (11), to disengage the said stop means and enable relative axial movement of the front part (7A) of the pressure plate to take place with respect to the rear part (7B) in a direction corresponding to an increase in the axial thickness of the pressure plate (7), so as to compensate for the said wear, and **in that** the resilient compensating means (2) exert a force greater than the force exerted by the clutch engaging means (81) on the pressure plate (7).

2. A clutch according to Claim 1, **characterised in that** the clutch engaging means (81) comprise at least one Belleville ring.

3. A clutch according to Claim 2, **characterised in that** the clutch engaging means (81) consist of a diaphragm (2) having a peripheral portion (81) in the form of a Belleville ring, which is extended radially inwards by a central portion divided into radial fingers (82) by slots so as to define the declutching means (82).

4. A clutch according to Claim 2, **characterised in that** the resilient compensating means (2) comprise an axially acting resilient ring which is mounted in compression between the two parts (7A, 7B) of the pressure plate (7), and which acts generally on a mean diameter intermediate between the mean diameter of engagement of the clutch engaging means (81) on the base (90) of the cover plate (9) and the mean diameter of engagement of the clutch engaging means (81) on the pressure plate (7, 7B, 71).

5. A clutch according to Claim 3, **characterised in that** the second friction face (31) is formed on the front face of the front part (7A) of the pressure plate (7), and **in that** the clutch engaging means (81) bear on the dorsal rear face (125, 71) on the rear part (7B, 122) of the pressure plate (7).

6. A clutch according to the preceding Claim, **characterised in that**, in the clutch engaged position, the diaphragm (8) bears through the outer periphery of its Belleville ring (81) against an annular boss (71) carried by, and projecting axially from, the dorsal rear face (122, 125) of the rear part (7B) of the pressure plate (7).

7. A clutch according to Claim 6, **characterised in that** the rear part (7B) of the pressure plate (7) is made in the form of a ring having an outer peripheral annular portion which is offset axially forward and which is received with a clearance in a complementary housing formed in, and in facing relationship with, the dorsal rear face of the front part (7A) of the pressure plate, and comprising an annular peripheral internal portion (122) which is offset axially towards the rear and which delimits, with a facing portion (110) of the dorsal rear face of the front part (7A) of the pressure plate (7), an annular housing in which the elastic axially acting compensating means (2) are arranged.

8. A clutch according to the preceding Claim, **characterised in that** the two annular peripheral portions (114, 122) of the rear part (7B) of the pressure plate are connected together by a connecting portion (130) which, in axial cross section, has a bent profile (132), the apex of which is oriented axially towards the rear and extends axially beyond the dorsal rear face (125) of the inner peripheral portion (122), so as to constitute the said annular boss (71).

9. A clutch according to the preceding Claim, **characterised in that** the resilient ring (2) is centred by a cylindrical surface (128) formed in the said connecting portion (130).

10. A clutch according to Claim 7, **characterised in that** both the front part (7A) and the rear part (7B) of the pressure plate (7) are guided in axial sliding movement with respect to each other.

11. A clutch according to the preceding Claim, **characterised in that** the annular peripheral inner portion (122) of the rear part (7B) of the pressure plate (7) is delimited by a cylindrical internal radial edge (120) which is guided in axial sliding movement along a cylindrical convex surface (117) formed on a sleeve portion (116) of the front part (7A) of the pressure plate (7), which extends axially towards the rear from the central portion of the dorsal rear face of the latter.

12. A clutch according to Claim 1, **characterised in that** the stop means (4) comprises two coaxial members (42, 43), one of which (43) carries the declutching means (41), and **in that** one of the members is adapted to come into engagement on a member fixed to one of the two parts (7A, 7B) of the pressure plate (7).

13. A clutch according to Claim 12, **characterised in that** the member (43) carrying the declutching means is adapted to come into engagement through its front portion which extends towards the support (1).

14. A clutch according to Claim 13, **characterised in that** the other member (42) of the stop means (4) is carried by an external radial projecting element (75) of the pressure plate (7).

15. A clutch according to Claim 12, **characterised in that** the stop means comprises two members (42 - 5, 43) in piston and cylinder relationship, defining a variable volume chamber (44) filled with grease.

16. A clutch according to Claim 15, **characterised in that** the stop means (4) comprises a hole (5) in the projecting element (75) of the pressure plate (7) and a piston (43) carrying the declutching means (41) centrally.

17. A clutch according to Claim 16, **characterised in that** the declutching means consist of a rod (41) guided by a bore (46) formed in the piston (43).

18. A clutch according to Claim 14, **characterised in that** the said projecting element (75) is part of the front part (7A) of the pressure plate (7).

19. A clutch according to Claim 18, **characterised in that** the bore (46) in the piston (43) has a widened rear portion (50) facing towards the rear part (7B) of the pressure plate, and **in that** the said widened portion delimits a seating (40) for a valve closing member (49) which is adapted to be manoeuvred by the rod (41) that constitutes the declutching means.

20. A clutch according to the preceding Claim, **characterised in that** the said widened portion of the bore (46) of the piston (43) contains a loading spring (48) that bears on the valve closing element (49) and on the base of the hole (5).

21. A clutch according to Claim 19, **characterised in that** the valve closing element (49) is spherical in form and is integral with the rod (41).

22. A clutch according to Claim 18, **characterised in that** the said projecting element consists of a lug (75) of the front part (7A) of the pressure plate which serves for fastening of a set of elastic tongues (72) which are part of the rotational coupling means, the said lug (75) projecting radially outwards at the outer periphery of the pressure plate (7, 7A).

23. A clutch according to Claim 1, **characterised in that** a plurality of stop means (4) are provided, being spaced apart circumferentially at regular intervals.

## Patentansprüche

1. Reibungskupplung, umfassend einen eine Gegenanpreßplatte (3) bildenden Träger (1), der gestaltet ist, um an einer ersten Welle befestigt zu werden, eine erste Reibfläche (31), die auf einer hinteren rückseitigen Fläche der Gegenanpreßplatte (3) vorgesehen ist, wenigstens eine Reibungskupplungsscheibe, die gestaltet ist, um drehfest mit einer zweiten Welle verbunden zu werden, und die an ihrem äußeren Umfang mit Reibbelägen bestückt ist, einen Deckel (9), der mit einem quer ausgerichteten und mittig gelochten Boden (90) versehen ist, Befestigungsmittel zur Befestigung des Deckels (9) am Träger (1), eine Druckplatte (7), die drehfest mit dem Deckel (9) durch Drehverbindungsmittel (72) verbunden ist, die eine axiale Verschiebung der Druckplatte (7) im Verhältnis zum Deckel (9) zulassen, eine zweite Reibfläche (21), die auf der zur ersten Reibfläche (31) gerichteten vorderen stirnseitigen Fläche der Druckplatte (7) vorgesehen ist, Einrückmittel (81), die am Boden (90) des Deckels (9) und an einer zum Boden (90) des Deckels (9) gerichteten hinteren rückseitigen Fläche (71, 125) der Druckplatte (7) zur Anlage kommen, um die Reibbeläge zwischen der ersten (21) und der zweiten (31) Reibfläche einzuspannen, Ausrückmittel (82), die mit den Einrückmitteln (81) verbunden sind, um die Einspannwirkung dieser Einrückmittel aufzuheben, eine verschleißnachstelleinrichtung (2, 4), um wenigstens den Verschleiß der Reibbeläge auszugleichen, und einen Auslöser (41), um das Wirksamwerden der Verschleißnachstelleinrichtung (2, 4) zu steuern,
**dadurch gekennzeichnet,**
**daß** die Verschleißnachstelleinrichtung (2, 4) einerseits axial wirksame elastische Ausgleichmittel (2), die zwischen zwei axial benachbarten, vorderen (7A) und hinteren (7B) Teilen der Druckplatte (7) wirken, und andererseits eine axial wirksame ausrückbare Sperrvorrichtung (4) umfaßt, die an der Druckplatte (7) angebracht ist,
**daß** der Auslöser (41) der Wirkung der Gegenanpreßplatte (3) ausgesetzt ist und auf die Sperrvorrichtung (4) einwirkt, um im Falle eines Verschleißes der Reibbeläge (11) die besagte Sperrvorrichtung auszurücken und eine relative axiale Bewegung des vorderen Teils (7A) der Druckplatte im Verhältnis zu ihrem hinteren Teil (7B) in einer Richtung freizugeben, die einer Vergrößerung der axialen Dicke der Druckplatte (7) entspricht, um den besagten Verschleiß auszugleichen,
und **daß** die elastischen Ausgleichmittel (2) eine Kraft ausüben, die größer als die durch die Einrückmittel (81) auf die Druckplatte (7) ausgeübte Kraft ist.

2. Kupplung nach Anspruch 1, **dadurch gekennzeichnet, daß** die Einrückmittel (81) wenigstens eine Tellerfeder aufweisen.

3. Kupplung nach Anspruch 2, **dadurch gekennzeichnet, daß** die Einrückmittel (81) aus einer Membranfeder (2) bestehen, die einen Umfangsteil (81) in Form einer Tellerfeder aufweist, der radial nach innen durch einen Mittelteil verlängert wird, der zur Bildung der Ausrückmittel (82) durch Schlitze in radiale Finger (82) unterteilt ist.

4. Kupplung nach Anspruch 2, **dadurch gekennzeichnet, daß** die elastischen Ausgleichmittel (2) eine axial wirksame Pederscheibe umfassen, die zusammengedrückt zwischen den zwei Teilen (7A, 7B) der Druckplatte (7) eingebaut ist und die insgesamt auf einem mittleren Durchmesser wirkt, der zwischen dem mittleren Auflagedurchmesser der Einrückmittel (81) am Boden (90) des Deckels (9) und dem mittleren Auflagedurchmesser der Einrückmittel (81) an der Druckplatte (7, 7B, 71) enthalten ist.

5. Kupplung nach Anspruch 3, **dadurch gekennzeichnet, daß** die zweite Reibfläche (31) auf der vorderen Stirnfläche des vorderen Teils (7A) der Druckplatte (7) ausgebildet ist und daß die Einrückmittel (81) an der hinteren rückseitigen Fläche (125, 71) des hinteren Teils (7B, 122) der Druckplatte (7) zur Anlage kommen.

6. Kupplung nach dem vorangehenden Anspruch, **dadurch gekennzeichnet, daß** in der eingekuppelten Position die Membranfeder (8) durch den äußeren Umfang ihrer Tellerfeder (81) an einem ringförmigen Vorsprung (71) anliegt, der axial vorstehend an der hinteren rückseitigen Fläche (122, 125) des hinteren Teils (7B) der Druckplatte (7) angebracht ist.

7. Kupplung nach Anspruch 6, **dadurch gekennzeichnet, daß** der hintere Teil (7B) der Druckplatte (7) in Form einer Scheibe ausgeführt ist, die einen axial nach vorn versetzten ringförmigen äußeren Umfangsteil umfaßt, der mit Spiel in eine dazu passende Aufnahme eingesetzt ist, die in die gegenüberliegende hintere rückseitige Fläche des vorderen Teils (7A) der Druckplatte eingearbeitet ist, und die einen axial nach hinten versetzten ringförmigen inneren Umfangsteil (122) umfaßt, der zusammen mit einem gegenüberliegenden Abschnitt (110) der hinteren rückseitigen Fläche des vorderen Teils (7A) der Druckplatte (7) eine ringförmige Aufnahme begrenzt, in der die axial wirksamen elastischen Ausgleichmittel angeordnet (2) sind.

8. Kupplung nach dem vorangehenden Anspruch, **dadurch gekennzeichnet, daß** die zwei ringförmigen Umfangsteile (114, 122) des hinteren Teils (7B) der Druckplatte untereinander durch einen Verbindungsabschnitt (130) verbunden sind, der im Axialschnitt ein abgewinkeltes Profil (132) aufweist, dessen Scheitel axial nach hinten ausgerichtet ist und sich axial jenseits der hinteren rückseitigen Fläche (125) des inneren Umfangsteils (122) erstreckt, um den besagten ringförmigen Vorsprung (71) zu bilden.

9. Kupplung nach dem vorangehenden Anspruch, **dadurch gekennzeichnet, daß** die Federscheibe (2) durch eine in dem besagten Verbindungsabschnitt (130) ausgebildete zylindrische Auflagefläche (128) zentriert wird.

10. Kupplung nach Anspruch 7, **dadurch gekennzeichnet, daß** die beiden vorderen (7A) und hinteren (7B) Teile der Druckplatte (7) im Verhältnis zueinander axial gleitend verschiebbar geführt sind.

11. Kupplung nach dem vorangehenden Anspruch, **dadurch gekennzeichnet, daß** der ringförmige innere Umfangsteil (122) des hinteren Teils (7B) der Druckplatte (7) durch einen zylindrischen inneren radialen Rand (120) begrenzt ist, der entlang einer konvexen zylindrischen Auflagefläche (117) axial gleitend verschiebbar geführt ist, die an einer Buchse (116) des vorderen Teils (7A) der Druckplatte (7) ausgebildet ist, die sich axial nach hinten vom Mittelteil der hinteren rückseitigen Fläche dieses Teils aus erstreckt.

12. Kupplung nach Anspruch 1, **dadurch gekennzeichnet, daß** die Sperrvorrichtung (4) zwei koaxiale Elemente (42, 43) umfaßt, von denen eines (43) den Auslöser (41) trägt, während das andere der Elemente an einem fest mit einem der beiden Teile (7A, 7B) der Druckplatte (7) verbundenen Element zur Anlage kommen kann.

13. Kupplung nach Anspruch 12, **dadurch gekennzeichnet, daß** das den Auslöser tragende Element (43) durch seinen zum Träger (1) gerichteten vorderen Teil zur Anlage kommen kann.

14. Kupplung nach Anspruch 13, **dadurch gekennzeichnet, daß** das andere Element (42) der Sperrvorrichtung (4) an einem äußeren radialen Vorsprung (75) der Druckplatte (7) angebracht ist.

15. Kupplung nach Anspruch 12, **dadurch gekennzeichnet, daß** die Sperrvorrichtung zwei im Verhältnis Zylinder-Kolben stehende Elemente (42-5, 43) umfaßt, die eine zwischen ihnen liegende mit Schmierfett befüllte Kammer mit veränderlichem Volumen (44) begrenzen.

16. Kupplung nach Anspruch 15, **dadurch gekennzeichnet, daß** die Sperrvorrichtung (4) ein Loch (5) des Vorsprungs (75) der Druckplatte (7) und einen Kolben (43) umfaßt, der den Auslöser (41) mittig trägt.

17. Kupplung nach Anspruch 16, **dadurch gekennzeichnet, daß** der Auslöser aus einem Stift (41) besteht, der durch eine in den Kolben (43) eingearbeitete Bohrung (46) geführt ist.

18. Kupplung nach Anspruch 14, **dadurch gekennzeichnet, daß** der besagte Vorsprung (75) zum vorderen Teil (7A) der Druckplatte (7) gehört.

19. Kupplung nach Anspruch 18, **dadurch gekennzeichnet, daß** die Bohrung (46) des Kolbens (43) einen zum hinteren Teil (7B) der Druckplatte gerichteten erweiterten hinteren Teil (50) umfaßt und daß der besagte erweiterte Teil einen Sitz (40) für ein Ventilverschlußelement (49) begrenzt, das durch den den Auslöser bildenden Stift (41) betätigt werden kann.

20. Kupplung nach dem vorangehenden Anspruch, **dadurch gekennzeichnet, daß** der erweiterte Teil der Bohrung (46) des Kolbens (43) als Aufnahme für eine Einstellfeder (48) dient, die an dem Ventilverschiußelement (49) und am Boden des Lochs (5) zur Anlage kommt.

21. Kupplung nach Anspruch 19, **dadurch gekennzeichnet, daß** das Ventilverschlußelement (49) kugelförmig ausgebildet und einstückig mit dem Stift (41) ausgeführt ist.

22. Kupplung nach Anspruch 18, **dadurch gekennzeichnet, daß** der besagte Vorsprung aus einem Ansatz (75) des vorderen Teils (7A) der Druckplatte besteht, der zur Befestigung eines Satzes aus (einer/mehreren) elastischen Zunge(n) (72) dient, die zu den Drehverbindungsmitteln gehören, wobei sich der besagte Ansatz (75) radial vorstehend nach außen am äußeren Umfang der Druckplatte (7, 7A) erstreckt.

23. Kupplung nach Anspruch 1, **dadurch gekennzeichnet, daß** mehrere in Umfangsrichtung gleichmäßig verteilte Sperrvorrichtungen (4) vorgesehen sind.
